# EUROPÄISCHE PATENTANMELDUNG

(11) **EP 4 227 028 A1**
(43) Veröffentlichungstag der Anmeldung: **16.08.2023**
(21) Anmeldenummer: 22155978.4
(22) Anmeldetag: 09.02.2022
(51) Int. Cl.: B22F 10/22, B22F 10/25, B29C 64/118, B29C 64/209, C04B 28/02, C04B 28/04, C04B 32/02, B22F 12/53, B33Y 10/00, B33Y 30/00

(54) **VERFAHREN UND VORRICHTUNG ZUR ADDITIVEN FERTIGUNG EINES OBJEKTS**

(71) Anmelder: Technische Universität München, 80333 München (DE)
(72) Erfinder: ABSTREITER, Tobias, 84435 Lengdorf (DE); WEGER, Daniel, 83677 Reichersbeuern (DE)
(74) Vertreter: Hoefer & Partner Patentanwälte mbB

(57) **Zusammenfassung**

Die Erfindung betrifft ein Verfahren zur additiven Fertigung eines Objekts (10), aufweisend die Schritte Zuführen eines strangförmigen Ausgangsmaterials (11) zu einer Reibanordnung (2), und Beschleunigen des Ausgangsmaterials (11) entlang einer Ausgaberichtung (100) durch die Reibanordnung (2), um das Ausgangsmaterial (11), insbesondere schichtweise, auf eine Bauplattform (12) und/oder auf bereits gefertigte Bereiche des Objekts (10) zur Fertigung des Objekts (10) aufzubringen, wobei das strangförmige Ausgangsmaterial (11) durch die Reibanordnung (2) zumindest teilweise verflüssigt und/oder zumindest teilweise plastifiziert und/oder zumindest teilweise zu Partikeln zerlegt wird. Außerdem betrifft die Erfindung eine Fertigungsvorrichtung (1) zur additiven Fertigung eines Objekts (10), aufweisend eine Reibanordnung (2), der ein strangförmiges Ausgangsmaterial (11) zuführbar ist, wobei die Reibanordnung (2) ausgebildet ist, das Ausgangsmaterial (11) entlang einer Ausgaberichtung (100) zu beschleunigen, um das Ausgangsmaterial (11), insbesondere schichtweise, auf eine Bauplattform (12) und/oder auf bereits gefertigte Bereiche des Objekts (10) zur Fertigung des Objekts (10) aufzubringen, wobei die Reibanordnung (2) ausgebildet ist, das strangförmige Ausgangsmaterial (11) zumindest teilweise zu verflüssigen und/oder zumindest teilweise zu plastifizieren und/oder zumindest teilweise zu Partikeln zu zerlegen.

## Beschreibung

Die Erfindung betrifft ein Verfahren zur additiven Fertigung eines Objekts. Außerdem betrifft die Erfindung eine Fertigungsvorrichtung zur additiven Fertigung eines Objekts. Bei einer additiven Fertigung erfolgt insbesondere ein schichtweiser Aufbau des Objekts aus einem Ausgangsmaterial. Dies wird auch als 3D-Druck bezeichnet.

Aus dem Stand der Technik sind 3D-Druckanwendungen bekannt. Insbesondere werden solche Techniken auch bei der Herstellung von Bauteilen aus Beton erprobt. Hierzu wird beispielsweise Beton schichtweise auf eine Oberfläche aufgebracht, um ein gewünschtes Bauwerk herzustellen. Allerdings benötigen Bauteile aus Beton bei Biegebelastung eine Bewehrung, die in das Bauteil aus Beton eingebracht werden muss. Zur additiven Herstellung einer Bewehrung ist beispielsweise das Wire Arc Additive Manufacturing (WAAM) Verfahren bekannt, bei dem mittels Lichtbogenschweißen eine schichtweise Herstellung der Bewehrung erfolgt. Das schichtweise Herstellen der Bewehrung erfolgt nach dem gegenwärtigen Stand der Technik in mehreren Schichten im Voraus vor dem schichtweisen Aufbringen des Betons.

Allerdings benötigt das Lichtbogenschweißen einen elektrischen Kontakt beispielsweise zu einer elektrischen Masseverbindung außerhalb des Bauteils oder zu der bereits gefertigten Bewehrung als Masseverbindung. Dies stellt einen zusätzlichen Fertigungsschritt und damit einen erhöhten Aufwand dar und hat höhere Kosten zur Folge. Außerdem wird während des Schweißvorgangs viel Wärme in die Bewehrung und damit in die Betonschichten, die üblicherweise noch nicht vollständig ausgehärtet sind, eingebracht. Somit besteht die Gefahr einer negativen Beeinflussung des Betons. Auch führt das schichtweise Auftragen der Schweißlagen zum Herstellen der Bewehrung oftmals zu nachteiligen Materialeigenschaften der Bewehrung.

Es ist Aufgabe der Erfindung, ein additives Fertigungsverfahren sowie eine additive Fertigungsvorrichtung bereitzustellen, die einen zuverlässigen, insbesondere schichtweisen, Aufbau eines Objekts ohne eine wesentliche Beeinträchtigung bereits vorhandener Bereiche des Objekts ermöglichen.

Die Lösung dieser Aufgabe erfolgt durch die Merkmale der unabhängigen Ansprüche. Die Unteransprüche haben bevorzugte Weiterbildungen der Erfindung zum Inhalt.

Wenn hierin "unten" und "oben" genannt werden, so beschreibt das räumliche Zuordnungen. "Unten" ist dem Erdmittelpunkt näher als "oben". Eine "Unterseite" ist dem Erdmittelpunkt näher zugeordnet als eine "Oberseite".

Wenn hierin "Reibscheiben" genannt werden, so ist insbesondere jede Art von Maschinenelementen gemeint, welche eine zumindest größtenteils rotationssymmetrische Ausgestaltung aufweisen. Die "Reibscheiben" sind insbesondere dazu ausgebildet, durch Reibung gegeneinander und/oder an einem weiterem Körper, wie beispielsweise an einem zugeführten Ausgangsmaterial für die additive Fertigung, Bewegungsenergie in Reibungswärme umzusetzen.

Wenn hierin "konische Reibscheiben" genannt werden, ist damit insbesondere jede Art von zumindest größtenteils rotationssymmetrischen Maschinenelementen gemeint, welche in ihrer Geometrie nicht zylindrisch ausgeführt sind. "Konische Reibscheiben" können in jedem Winkel oder Winkelverbund und jedem Durchmesser ausgeführt sein, welche für das Verfahren und die Vorrichtung der vorliegenden Erfindung sinnvoll sind. Es können Winkel der Reibflächen zwischen 0° und 90° in Bezug zur Rotationsachse der "konischen Reibscheiben" dargestellt werden. Unter "konische Reibscheiben" sind auch Reibscheiben zu verstehen, welche eine zumindest teilweise konvexe oder konkave Kontur zumindest im Bereich der Reibfläche aufweisen. Alternativ oder ergänzend können hierin "konische Reibscheiben" auch als "konisch ausgeführte Reibscheiben" oder "Reibscheiben mit einer konischen Ausgestaltung" oder ein sinngemäßer Wortlaut aufgeführt sein und sind dementsprechend gleichsinnig zu verstehen.

Eine "Reibfläche" ist hierin insbesondere als derjenige Bereich einer Reibscheibe zu verstehen, in dem ein bewusst herbeigeführter Reibkontakt mit Wärmeentwicklung einhergeht bzw. in dem eine wesentliche Einwirkung zwischen einem strangförmigen Ausgangsmaterial und der Reibscheibe zumindest überwiegend stattfindet. Eine "Reibfläche" kann glatt oder relativ glatt ausgeführt sein, wie beispielsweise als polierte Oberfläche, oder kann eine gezielte Rauheit aufweisen. Eine "Reibfläche" kann zumindest lokal angeordnete Oberflächenstrukturen aufweisen, welche den Reibkontakt begünstigen können. Solche Oberflächenstrukturen können beispielsweise als Erhebungen, wie beispielsweise kleine Pyramiden, ausgeführt sein. Eine "Reibfläche" kann eine Oberflächenbeschichtung einer Reibscheibe oder ein Wechselelement zum Aufbringen, insbesondere zum segmentierten Aufbringen, auf eine Reibscheibe sein.

Unter "Ausgangsmaterial" ist insbesondere jedes Material in einem festen Ausgangszustand zu verstehen, welches durch die erfindungsgemäße Aufbringung von Reibenergie in einen plastischen und/oder geschmolzenen Zustand überführt werden kann. Ein Ausgangsmaterial kann ein Metall, eine Legierung, ein Polymer oder ein Materialcompound, wie beispielsweise eine Kombination aus einem Polymer und Fasern sein.

Ein "strangförmiges Ausgangsmaterial" ist im Querschnitt bevorzugt rund ausgeführt mit bevorzugten Durchmessern zwischen 0,25 mm und 5 mm. Der Querschnitt kann auch andere Formen aufweisen wie eine Ovale, ein Dreieck, ein Viereck, ein Vieleck oder eine Sternform. Ein "strangförmiges Ausgangsmaterial" kann auch als Rohr, beispielsweise als Rundrohr oder als Rechteckrohr, ausgeführt sein, d.h. es kann eine Ausnehmung/Aussparung aufweisen, die sich entlang der Längserstreckungsrichtung des "strangförmigen Ausgangsmaterials" erstreckt. Ein "strangförmiges Ausgangsmaterial" kann eine Länge von wenigen Zentimetern bis hin zu mehreren Kilometern aufweisen, wenn es auf oder in entsprechenden Vorkehrungen gelagert oder auf eine andere Weise verarbeitet werden kann. Ein "strangförmiges Ausgangsmaterial" kann aus jedem Ausgangsmaterial wie auch aus einer Kombination von Ausgangsmaterialien in verschiedenen Verfahren hergestellt werden. Es kann beispielsweise aus zwei oder mehreren Materialien durch Coextrusion hergestellt werden und/oder es kann mit Nanopartikeln modifiziert sein. Ein "strangförmiges Ausgangsmaterial" kann auch eine Beschichtung aufweisen.

Eine "Bauplattform" ist insbesondere jede Art von Untergrund und/oder jede Art von Oberfläche, welche dafür geeignet ist, Ausgangsmaterial nach den hierin genannten erfindungsgemäßen Ausgestaltungen aufzunehmen. Eine "Bauplattform" kann in bestimmten Ausführungsformen eben oder nahezu eben ausgeführt sein. In anderen Ausgestaltungen kann sie eine unebene Oberflächengestaltung haben. In manchen Ausgestaltungen kann eine "Bauplattform" lokal unterschiedliche Beschaffenheiten aufweisen und/oder aus unterschiedlichen Materialeien bestehen. Eine "Bauplattform" kann aus festem oder überwiegend festem Material geformt sein wie auch aus weichen und/oder losen Bestandteilen bestehen, wie beispielsweise aus granularen Schüttungen. Eine "Bauplattform" kann auch eine Flüssigkeit umfassen oder sein. In bestimmten Ausführungsformen kann eine "Bauplattform" eine glatte oder eine raue Oberfläche aufweisen. In bestimmten Ausführungsformen kann sie auch in verschiedenen Ebenen ausgebildet sein. In manchen Ausführungsformen kann eine "Bauplattform" eine Beschichtung aufweisen und/oder einer Vorbehandlung unterzogen sein.

Ein "Objekt" ist insbesondere ein Teil oder eine Struktur in jeglicher Form und aus jeglichem Material, welches mit dem Verfahren und/oder der Vorrichtung dieser Erfindung gefertigt werden kann. Auch Teile oder Bereiche eines ganzen Bauteils oder einer Baugruppe sind erfindungsgemäß als "Objekt" zu verstehen. Insbesondere ist ein "Objekt" zu großen Teilen bevorzugt aus einem Metall oder einem Polymermaterial gebildet oder enthält mindestens größere Anteile eines derselben.

Ein "Bauteil" ist insbesondere jedes physische Gebilde, welches zumindest in Bestandteilen mit dem erfindungsgemäßen Verfahren und/oder der erfindungsgemäßen Vorrichtung gefertigt werden kann. Ein "Bauteil" ist bevorzugt eine Kombination von Beton und mindestens einem Metall.

Eine "Ausgaberichtung" beschreibt die Bewegungstrajektorie eines Ausgangsmaterials insbesondere im Bereich zwischen der Reibfläche und der Bauplattform bzw. im Bereich zwischen der Reibfläche und dem Objekt. Eine "Ausgaberichtung" kann in ihrer geometrischen Ausgestaltung zumindest annähernd eine Linie bilden, oder eine mehr oder weniger flächige oder eine dreidimensionale Ausbreitung beschreiben. Der projizierte Materialstrahl einer "Ausgaberichtung" kann zumindest überwiegend einen Punkt bzw. eine kreisrunde Fläche darstellen oder jede andere geometrische Form annehmen. Der projizierte Materialstrahl einer "Ausgaberichtung" kann auch die Querschnittsform eines Rohres aufweisen. Der projizierte Materialstrahl einer "Ausgaberichtung" kann mehr oder weniger geometrisch undefiniert ausgebildet sein und so eher mit dem Aufprallverhalten von Schrotkugeln vergleichbar sein. Die Bewegungstrajektorie einer "Ausgaberichtung" kann auch einen Drall aufweisen und somit zumindest im Ansatz einer Wendel entsprechen. Die Richtungsvektoren einer "Ausgaberichtung" schneiden ausgehend von den Reibflächen bevorzugt die Oberfläche der Bauplattform und/oder Teile des Objekts. Eine "Ausgaberichtung" ist insbesondere in Richtung der Bauplattform orientiert und kann bevorzugt, bezogen auf ein Lot der Bauplattform, einen Winkel von 0° bis 90° annehmen.

Unter "Beton" versteht man insbesondere Materialmischungen aus einem Zuschlagsmaterial (aus Gesteinen wie Sand, Kies oder auch Zuschläge aus anderen Materialien wie Glas, Ton oder Holz), einem Binder, wie beispielsweise Zement, sowie Wasser und evtl. weiteren Additiven. Der Binder ist insbesondere hauptsächlich anorganisch und/oder mineralisch, wie beispielsweise Zement, Geopolymer oder Magnesiabinder. Auch Mörtel oder Feinkornbeton, welcher technisch durch die Wahl eines Größtkorns von kleiner/gleich 4 mm meist so definiert wird, fällt erfindungsgemäß unter den Begriff "Beton".

Wenn hierin von einem "Bauteil aus Beton" oder einem sinngemäßen Wortlaut geschrieben wird, so ist bevorzugt ein Bauteil gemeint, welches bevorzugt zumindest teilweise mittels additiver Fertigung herstellbar ist und zuvor definierte Materialmischungen entsprechend dem Ausdruck "Beton" umfasst. Additive Fertigungsverfahren können dabei sein: Beton Extrusion, ein additives Ausbringen durch Betonausgabe, weitere ablegende oder spritzende Verfahren sowie insbesondere selektiv bindende Partikelbettverfahren wie beispielsweise SCA oder SPI.

SCA steht für "Selective Cement Activation" und bedeutet, dass ein Binder in einem Partikelbett vorgesehen ist, wobei eine selektive Bindung durch einen Aktivator wie Wasser erfolgt. Auf diese Weise lässt sich eine beliebig geformte Betonschicht herstellen. SPI steht für "Selective Paste Intrusion" und bedeutet, dass eine selektive Bindung des Partikelbetts mit einem flüssigen Binder erfolgt. In beiden Fällen ist zunächst ein Partikelbett vorgesehen, wobei nicht abgebundene Bereiche des Partikelbetts nach dem Abbinden zu entfernen sind.

Unter "Bewehrung" oder "Armierung" versteht man insbesondere eine Verstärkung von (beispielsweise aus Beton gefertigten) Bauteilen zur Erhöhung deren Tragfähigkeit. Durch "Bewehrung" kann die Tragfähigkeit eines Bauteils gezielt anisotrop beeinflusst werden. Eine "Bewehrung" nimmt vorzugweise Zugspannungen innerhalb des Bauteils auf. Eine "Bewehrung" kann aus Metall, Stahl, Kunststoff, Glas oder Carbon bestehen. Eine "Bewehrung" kann stabförmig, drahtförmig, als Faser, Matte oder Textil/Gewirk vorliegen. Eine "stabförmige Bewehrung" oder eine "drahtförmige Bewehrung" kann gerade, gebogen oder einer Kraftrichtung folgend ausgeführt sein. Eine "stabförmige Bewehrung" oder eine "drahtförmige Bewehrung" kann auch zusätzlich Fasern umfassen.

Die Aufgabe wird gelöst durch ein Verfahren zur additiven Fertigung eines Objekts, aufweisend die folgenden Schritte: Zunächst erfolgt ein Zuführen eines strangförmigen Ausgangsmaterials zu einer Reibanordnung. Das Zuführen wird insbesondere durch die Reibanordnung und/oder durch eine (zusätzliche) Zufuhrvorrichtung ausgeführt. Die Reibung (zwischen dem zugeführten Ausgangsmaterial und der Reibanordnung bzw. Teilen davon) innerhalb der Reibanordnung vermittelt ein Erhitzen des Ausgangsmaterials, wodurch dieses bevorzugt seine Strangform verliert. Schließlich erfolgt ein Beschleunigen des Ausgangsmaterials entlang einer Ausgaberichtung durch die Reibanordnung. Dadurch lässt sich das Ausgangsmaterial, insbesondere schichtweise, auf eine Bauplattform und/oder auf bereits gefertigte Bereiche des Objekts zur Fertigung des Objekts aufbringen.

Das strangförmige Ausgangsmaterial wird durch die Reibanordnung zumindest teilweise verflüssigt und/oder zumindest teilweise plastifiziert und/oder zumindest teilweise zu Partikeln zerlegt. Die durch das Beschleunigen des Ausgangsmaterials vermittelte kinetische Energie wird bevorzugt zur Herstellung einer Verbindung des Ausgangsmaterials mit bereits gefertigten Bereichen des Objekts genutzt. Das Aufbringen des Ausgangsmaterials erfolgt dabei durch formschlüssige Verbindung, insbesondere mechanische Verkrallung, aufgrund der kinetischen Energie des beschleunigten Ausgangsmaterials sowie einer Verformung beim Auftreffen desselben auf die Bauplattform bzw. auf die bereits gefertigten Bereiche des Objekts und/oder durch stoffschlüssige Verbindung mit bereits gefertigten Bereichen des Objekts, insbesondere aufgrund eines Aufschmelzens des Ausgangsmaterials und/oder der bereits gefertigten Bereiche des Objekts. Bevorzugt erfolgt der Aufbau, insbesondere der Schichtaufbau, durch eine Kombination aus Schmelzwärme und kinetischer Energie. Auf diese Weise lässt sich mit einer einfachen und kostengünstigen Fertigungsvorrichtung eine additive Fertigung erreichen, die einen optimalen Verbund innerhalb des hergestellten Objekts erreicht. Außerdem erfolgt durch die kinetische Energie des Ausgangsmaterials nach dem Erhitzen in der Reibanordnung bevorzugt nur ein minimaler Wärmeeintrag in das Objekt während der Herstellung, wodurch insbesondere eine Schädigung des Objekts oder, falls das Objekt Teil eines Verbundkörpers ist, anderer Komponenten des Verbundkörpers, vermieden oder zumindest verringert ist. Insbesondere im Vergleich zum Lichtbogenschweißen kann der Wärmeeintrag verringert werden, wobei je nach Auslegung der Beschleunigung auch ein moderater Wärmeeintrag beibehalten werden kann. Schließlich ist durch die Reibanordnung ein schnelles Erhitzen und damit ein hoher Materialdurchsatz ermöglicht, was zu hohen Geschwindigkeiten beim Aufbau, insbesondere beim Schichtaufbau, führt.

Gemäß einer Ausführungsform ist vorgesehen, dass durch die Reibanordnung ein Erhitzen des Ausgangsmaterials durch Reibung erfolgt.

Durch die Reibanordnung wird das strangförmige Ausgangsmaterial zumindest teilweise verflüssigt und/oder zumindest teilweise plastifiziert und/oder zumindest teilweise zu Partikeln zerlegt. Die so erzeugte Schmelze und/oder die so erzeugten Partikel wird/werden anschließend durch die Reibanordnung beschleunigt, um zusätzlich zu der Wärmeenergie auch kinetische Energie aufzuweisen. Wird das Ausgangsmaterial nicht durch die Reibanordnung verflüssigt, so kann durch passende Wahl der kinetischen Energie eine Verflüssigung und/oder Plastifizierung auch durch den Aufprall auf die bereits gefertigten Bereiche des Objekts erfolgen. Alternativ kann durch die Wahl der kinetischen Energie verhindert werden, dass beim Auftreffen eine Schmelze entsteht und die Partikel somit durch mechanische Kräfte aufgrund ihrer Verformung beim Aufprall aneinander haften.

Bevorzugt ist vorgesehen, dass die Reibanordnung beheizt wird. Das Heizen erfolgt vorteilhafterweise durch induktives Heizen der Reibanordnung. Alternativ oder zusätzlich erfolgt das Heizen der Reibanordnung bevorzugt durch induktives Heizen von angrenzenden Maschinenelementen, welche Wärme in die Reibanordnung einleiten. Auf diese Weise lässt sich die durch das Heizen in die Reibanordnung eingebrachte Wärme in das Ausgangsmaterial einleiten, um somit die thermische Energie in dem Ausgangsmaterial zu erhöhen. Zusammen mit der kinetischen Energie des Ausgangsmaterials lässt sich somit eine höhere Gesamtenergie bereitstellen, um das Ausgangsmaterial zuverlässig mit bereits gefertigten Bereichen des Objekts zu verbinden.

Das Ausgangsmaterial wird während des Zuführens bevorzugt vorgeheizt. Das Vorheizen erfolgt besonders vorteilhaft unmittelbar vor Erreichen der Reibanordnung. Somit ist die von der Reibanordnung zum Schmelzen des Ausgangsmaterials einzubringende Wärmeenergie verringert. Das Vorheizen erfolgt bevorzugt durch induktives Heizen des Ausgangsmaterials. Hierzu kann beispielsweise eine Spule vorgesehen sein, durch die bzw. an der das strangförmige Ausgangsmaterial hindurchgeführt bzw. vorbeigeführt wird bevor es die Reibanordnung erreicht. Zusätzlich oder alternativ kann das Ausgangsmaterial durch andere Energieformen vorgeheizt werden. Dabei können Widerstandsheizer, Strahlungsheizer, Plasma, Mikrowellen, Laser oder auch andere Heizformen verwendet werden, wie beispielsweise die Zuführung von Wärmeenergie durch Reibung.

Vorteilhafterweise ist vorgesehen, dass durch die Reibanordnung ein Materialaustrag des Ausgangsmaterials von zumindest 5 kg/h, bevorzugt von zumindest 10 kg/h, besonders bevorzugt von zumindest 20 kg/h, erfolgt. Dies führt zu einer schnellen Fertigung des Objekts durch einen raschen Aufbau, insbesondere Schichtaufbau. Es können daher große oder viele Objekte in kurzer Zeit hergestellt werden. Ebenso lässt sich das Verfahren zum Herstellen von Objekten verwenden, die Teil eines Verbundbauteils sind, wobei andere Komponenten des Verbundbauteils durch andere Fertigungsverfahren, insbesondere andere additive Fertigungsverfahren hergestellt werden. Durch die schnelle Fertigbarkeit des Objekts ist somit eine Verzögerung der Herstellung des Verbundbauteils durch lange Herstellzeiten des Objekts vermieden.

Das Objekt wird in einer vorteilhaften Ausgestaltung aus unterschiedlichen Ausgangsmaterialien hergestellt. Dies erfolgt bevorzugt indem entweder derselben Reibanordnung gleichzeitig oder nacheinander unterschiedliche Ausgangsmaterialien zugeführt werden. Alternativ oder zusätzlich sind mehrere Reibanordnungen vorgesehen, denen unterschiedliche Ausgangsmaterialien zugeführt werden, wobei alle Reibanordnungen zur Herstellung desselben Objekts vorgesehen sind. Insbesondere durch den kinetischen Energieeintrag ergibt sich eine Vielzahl von Möglichkeiten, Bereiche bzw. Schichten aus unterschiedlichen Materialien aufzutragen, um das Objekt zu fertigen. Bevorzugt können auf diese Weise unterschiedliche Stähle, Stähle und Kupfer sowie Nickel und Kupfer kombiniert werden. Alternativ lassen sich auch andere Stoffe wie verschiedene Kunststoffe untereinander, mit metallischen Werkstoffen oder mit anderen Stoffen kombinieren.

Eine vorteilhafte Ausgestaltung sieht vor, dass ein additives Fertigen eines Bauteils durch schichtweises Auftragen von, insbesondere noch nicht vollständig abgebundenem, Beton und/oder Mörtel auf eine Oberfläche und/oder durch schichtweises Herstellen von Beton oder Mörtel auf einer Oberfläche erfolgt. Bei dem Auftragen wird bevorzugt bereits fertig gemischter Beton oder Mörtel ausgegeben. Bei dem schichtweisen Herstellen von Beton oder Mörtel erfolgt ein Mischen des Betons in einem Partikelbett nur an den gewünschten Orten zum Herstellen der Schicht, beispielsweise durch selektiv bindende Partikelbettverfahren und/oder dem selektiven Zugeben von Wasser oder einem anderen Aktivator. Außerdem wird ein Objekt mit einem Verfahren wie zuvor beschrieben hergestellt, wobei das Objekt bevorzugt eine Bewehrung innerhalb des Bauteils sein kann, die während der additiven Fertigung des Bauteils mittels eines erfindungsgemäßen Verfahrens gefertigt wird. Das Bauteil stellt somit einen Verbund aus Beton und Bewehrung dar, der insgesamt durch additives Fertigen hergestellt sein kann, insbesondere ohne dass eine der Komponenten vorgefertigt ist. Somit lassen sich verschiedene Geometrien herstellen. Es kann vorteilhaft sein, wenn der schichtweise Aufbau der Bewehrung dem schichtweisen Aufbau des Betons um wenige Schichten im Voraus erfolgt, oder dieses in umgekehrter Reihenfolge geschieht.

Die Erfindung betrifft außerdem eine Fertigungsvorrichtung zur additiven Fertigung eines Objekts. Die Fertigungsvorrichtung weist eine Reibanordnung auf, der ein strangförmiges Ausgangsmaterial zuführbar ist. Das Zuführen des Ausgangsmaterials erfolgt bevorzugt durch die Reibanordnung selbst und/oder durch eine (zusätzliche) Zufuhrvorrichtung. Die Reibanordnung ist ausgebildet, das Ausgangsmaterial entlang einer Ausgaberichtung zu beschleunigen, um das Ausgangsmaterial, insbesondere schichtweise, auf eine Bauplattform und/oder auf bereits gefertigte Bereiche des Objekts zur Fertigung des Objekts aufzubringen. Somit ist mit der Fertigungsvorrichtung insbesondere ein zuvor beschriebenes Verfahren zur Herstellung des Objekts durchführbar. Durch die Reibanordnung ist das strangförmige Ausgangsmaterial vorteilhafterweise zumindest teilweise verflüssigbar und/oder zumindest teilweise plastifizierbar und/oder zumindest teilweise zu Partikeln zerlegbar. Die Fertigungsvorrichtung erlaubt ein Aufbringen des Ausgangsmaterials durch formschlüssige Verbindung, insbesondere mechanische Verkrallung, aufgrund der kinetischen Energie des beschleunigten Ausgangsmaterials sowie einer Verformung beim Auftreffen auf die Bauplattform bzw. auf die bereits gefertigten Bereiche und/oder durch stoffschlüssige Verbindung mit bereits gefertigten Bereichen, insbesondere aufgrund eines Aufschmelzens des Ausgangsmaterials. Bevorzugt ermöglicht die Fertigungsvorrichtung einen Aufbau, insbesondere einen Schichtaufbau, durch eine Kombination aus Reibungswärme und kinetischer Energie.

Die Reibanordnung weist bevorzugt eine erste Reibscheibe und eine zweite Reibscheibe auf. Die erste Reibscheibe und die zweite Reibscheibe sind insbesondere durch zumindest eine Antriebsvorrichtung in entgegengesetzter Rotationsrichtung rotierbar. Besonders vorteilhaft ist jeder Reibscheibe eine eigene Antriebsvorrichtung zugeordnet und ist jede Reibscheibe mit der ihr zugeordneten Antriebsvorrichtung in Wirkverbindung bringbar. Das Ausgangsmaterial ist zwischen den Reibflächen der ersten Reibscheibe und der zweiten Reibscheibe hindurchführbar, um beschleunigt und bevorzugt außerdem durch Reibung erhitzt zu werden. Dazu ist besonders bevorzugt vorgesehen, dass zumindest die Reibflächen der ersten Reibscheibe und/oder zweiten Reibscheibe eine hitzefeste und/oder verschleißfeste Oberfläche und/oder Beschichtung aufweisen. Eine solche Beschichtung ist besonders vorteilhaft aus einem Keramikmaterial hergestellt. Alternativ oder zusätzlich sind die erste Reibscheibe und/oder zweite Reibscheibe zumindest teilweise bevorzugt aus einem hitzefesten und/oder verschleißfesten Material, insbesondere aus einem Keramikmaterial, hergestellt. Weiterhin ist insbesondere vorgesehen, dass eine Winkelgeschwindigkeit der ersten Reibscheibe und/oder der zweiten Reibscheibe an eine Vorschubgeschwindigkeit des Ausgangsmaterials entlang der Reibanordnung anpassbar ist. Die Winkelgeschwindigkeit ist derart eingestellt, dass insbesondere eine Bahngeschwindigkeit desjenigen Bereichs der ersten Reibscheibe und/oder der zweiten Reibscheibe, der mit dem Ausgangsmaterial in Kontakt gelangt, um mindestens einen Faktor 10, bevorzugt um mindestens einen Faktor 100, besonders bevorzugt um mindestens einen Faktor 1000, größer ist als die Vorschubgeschwindigkeit des Ausgangsmaterials entlang der Reibanordnung. Die Bahngeschwindigkeit errechnet sich durch Multiplikation der Winkelgeschwindigkeit der ersten Reibscheibe und/oder zweiten Reibscheibe mit dem Abstand desjenigen Bereichs, der mit dem Ausgangsmaterial in Kontakt gelangt, von der Rotationsachse der jeweiligen Reibscheibe. Der Kontaktbereich der ersten Reibscheibe und/oder der zweiten Reibscheibe kann näherungsweise als Punkt oder Kreisbogen angesehen werden. Auf diese Weise kann eine optimale Erhitzung des Ausgangsmaterials durch Reibung erreicht werden. Die Winkelgeschwindigkeiten der ersten Reibscheibe und der zweiten Reibscheibe haben bevorzugt zumindest annähernd den gleichen Wert. In einer vorteilhaften Ausgestaltung werden die Winkelgeschwindigkeiten der ersten Reibscheibe und/oder der zweiten Reibscheibe während des Verfahrens angepasst und sind somit variabel und nicht konstant. Beispielsweise ist vorgesehen, die Winkelgeschwindigkeiten der beiden Reibscheiben zumindest temporär um einen gewissen Wert zu ändern.

Weiter ist besonders bevorzugt vorgesehen, dass die erste Reibscheibe und/oder die zweite Reibscheibe zumindest teilweise konisch ausgeführt sind. Dies erlaubt eine optimale Einbringung von Reibenergie in das Ausgangsmaterial und damit ein optimales Erhitzen des Ausgangsmaterials. Alternativ oder zusätzlich sind die erste Reibscheibe und/oder die zweite Reibscheibe über jeweils eine Welle antreibbar, wobei die Wellen bevorzugt nichtparallel orientiert sind. Auch dies führt, besonders vorteilhaft zusammen mit der zuvor genannten konischen Ausgestaltung der Reibscheibe(n), zu einem optimalen Wärmeeintrag in das Ausgangsmaterial. Die Reibanordnung ermöglicht somit bevorzugt ein rasches Erhitzen des Ausgangsmaterials, wodurch ein hoher Materialdurchsatz ermöglicht ist. Bevorzugt kann der Winkel zwischen den beiden Wellen der beiden Reibscheiben variiert werden. Dies kann sowohl statisch geschehen, also bevorzugt vor dem Beginn der additiven Fertigung oder dynamisch während der Bearbeitung mit der beschriebenen Vorrichtung.

Bevorzugt kann der Abstand der beiden Reibscheiben durch eine bevorzugt axiale Verstellmöglichkeit auf den jeweiligen Wellen verändert werden. Ein entsprechender Verstellmechanismus kann sowohl auf nur einer Welle wie auch auf beiden Wellen vorgesehen sein. Eine solche vorrangig axiale Verstellung zumindest einer Reibscheibe auf der angegliederten Welle kann vor und/oder während des Prozesses geschehen.

Die erste Reibscheibe und/oder die zweite Reibscheibe sind bevorzugt mittels zumindest einer Heizvorrichtung aufheizbar. Dies erfolgt besonders vorteilhaft durch induktives Heizen. Durch das Aufheizen der ersten Reibscheibe und/oder der zweiten Reibscheibe mittels einer Heizvorrichtung ist die zum Erhitzen des Ausgangsmaterials benötigte Reibenergie reduziert. Dies führt einerseits zu einer geringeren Abnutzung von Reibanordnung und Ausgangsmaterial, andererseits ist das Ausgangsmaterial schneller aufheizbar, wodurch ein höherer Materialdurchsatz ermöglicht ist. Außerdem kann auf diese Weise ein gleichmäßigeres Temperaturniveau im Prozess erzielt werden, weil die Reibscheiben nach einem Stopp der Förderung des strangförmigen Ausgangsmaterials nicht oder zumindest nicht stark abkühlen, wie es ohne ein zusätzliches Heizen der Reibscheiben der Fall wäre.

Die erste Reibscheibe und die zweite Reibscheibe sind vorteilhafterweise durch die zumindest eine Antriebsvorrichtung mit unterschiedlichen Drehzahlen rotierbar, um einen Drall des ausgegebenen Ausgangsmaterials zu erzeugen. Durch den Drall lässt sich insbesondere eine Bewegungstrajektorie des Ausgangsmaterials nach Verlassen der Reibanordnung stabilisieren. Somit sind höhere Genauigkeiten bei der Herstellung des Objekts erreichbar.

In bestimmten Ausführungsformen der Erfindung können drei, vier oder mehr Reibscheiben verwendet werden, welche mit den erfindungsmäßigen Merkmalen ausgeführt sein können, um auf diese Weise mindestens eine Reibanordnung bzw. einen Teil davon zu bilden.

In manchen Ausführungsformen der Erfindung können die Reibscheiben unterschiedliche Durchmesser, Geometrien, Oberflächen und/oder Materialien aufweisen.

In bestimmten Ausführungsformen der Erfindung weist mindestens eine Reibscheibe einer Reibanordnung während des Beschleunigens von Ausgangsmaterial eine Drehzahl von über 1000 U/min, bevorzugt von über 5000 U/min und besonders bevorzugt von über 10000 U/min auf.

In vorteilhaften Ausführungsformen der Erfindung weisen die Reibscheiben Durchmesser von mindestens 20 mm, bevorzugt von mindestens 40 mm und besonders bevorzugt von mindestens 55 mm, wie beispielsweise 60 mm oder 70 mm auf.

In manchen Ausführungsformen der Erfindung können die Reibscheiben untereinander signifikant unterschiedliche Drehzahlen aufweisen, wie eine Differenz von mindestens 200 U/min, bevorzugt von mindestens 1000 U/min und besonders bevorzugt von über 3000 U/min.

Besonders vorteilhaft ist eine Vorheizvorrichtung vorgesehen, die zum Vorheizen des Ausgangsmaterials vor Erreichen der Reibanordnung dient. Somit ist eine von der Reibanordnung aufzubringende Heizleistung reduziert. Das Vorheizen erfolgt insbesondere durch induktives Heizen, beispielsweise indem das strangförmige Ausgangsmaterial durch eine bzw. an einer Spule geführt bzw. vorbeigeführt wird. Durch die Reduktion der Heizleistung der Reibanordnung, die durch Reibenergie erzeugt wird, kann eine Belastung/ein Verschleiß der Reibanordnung sowie des Ausgangsmaterials aufgrund der verringerten Reibung reduziert werden.

In bestimmten Ausführungsformen, beispielsweise bei der Verarbeitung von Aluminium- oder Kupferlegierungen mit hoher Wärmeleitfähigkeit, kann es vorteilhaft sein, das strangförmige Ausgangsmaterial bevorzugt unmittelbar vor dem Einzugsbereich der Reibscheiben zu kühlen. Eine solche Kühlung kann geschehen, indem das strangförmige Ausgangsmaterial durch ein Rohr geführt wird und der radiale Abstand vom strangförmigen Ausgangsmaterial zum Rohr ein möglichst kleines Spiel im Durchmesser aufweist. Ein solches Rohr ist bevorzugt mit einer sich umfangseitig um das Rohrs erstreckenden Kühlvorrichtung versehen. Auf diese Weise kann vom strangförmigen Ausgangsmaterial Wärme abgeführt und damit ein vorzeitiges Erweichen desselben verhindert werden. In einer anderen Ausführungsform weist das beschriebene Rohr zur Kühlung des strangförmigen Ausgangsmaterials ein gewisses Spiel zu diesem auf, so dass sich ein - im Querschnitt des Rohrs betrachtet insbesondere kreisringförmiger - Spalt zwischen dem durch das Rohr geführten Ausgangsmaterial und der dem Ausgangsmaterial zugewandten Innenwandung des Rohrs ausgebildet. Durch diesen Spalt kann Pressluft oder Schutzgas wie Stickstoff geleitet werden und so eine gerichtete Kühlung des strangförmigen Ausgangsmaterials erwirken.

Die Vorrichtung kann eine Steuer-/Regeleinrichtung aufweisen, mit der technische Parameter wie Drehzahlen, Vorschübe, Abstände der Reibscheiben, Temperaturen der Reibscheiben und Temperatur des strangförmigen Ausgangsmaterials sowie weitere Parameter gesteuert oder geregelt werden können.

In bestimmten Ausführungsformen kann die Temperatur des geförderten oder beschleunigten Ausgangsmaterials bevorzugt im Bereich zwischen den Reibscheiben und der Bauplattform oder dem Objekt gemessen werden, bevorzugt durch ein Infrarot-Thermometer.

Bevorzugt ist für das zuvor beschriebene Fertigungsverfahren und/oder die zuvor beschriebene Fertigungsvorrichtung vorgesehen, dass das Ausgangsmaterial ein Metalldraht,ein Kunststoff in Strangform oder ein Verbundmaterial in Strangform ist. Strangförmiges Ausgangsmaterial ist insbesondere günstiger in der Anschaffung und Nutzung als beispielsweise pulver- oder granulatförmiges Ausgangsmaterial. Durch die Verwendung der Reibanordnung zum Erhitzen des Ausgangsmaterials kann die Fertigungsvorrichtung und/oder das Fertigungsverfahren leicht an ein anders zu verwendendes Ausgangsmaterial angepasst werden. Hierzu ist bevorzugt die zu erzeugende Reibleistung durch die Reibanordnung einzustellen, beispielsweise durch die Drehzahl der Reibscheiben und/oder den Vorschub des Ausgangsmaterials und/oder den Abstand der Reibscheiben zueinander.

In manchen Ausführungsformen der Erfindung können auch mehrere strangförmige Ausgangsmaterialien gleichzeitig verwendet werden. Mit anderen Worten können beispielsweise zwei strangförmige Ausgangsmaterialien aus unterschiedlichen Werkstoffen zumindest temporär einer Reibanordnung umfassend mindestens zwei Reibscheiben mit gleicher oder unterschiedlicher Vorschubgeschwindigkeit zugeführt und auf diese Weise erhitzt und/oder beschleunigt werden. Auf diese Weise kann beispielsweise eine variierende Materialmatrix am Objekt erzielt werden. So können beispielsweise zwei halbrunde, strangförmige Ausgangsmaterialien aus zwei unterschiedlichen Werkstoffen verarbeitet werden, welche durch eine spiegelverkehrte Anordnung - im Querschnitt betrachtet -zumindest annähernd eine kreisförmige Kontur ausbilden.

Die Erfindung betrifft außerdem eine Verwendung einer Fertigungsvorrichtung wie zuvor beschrieben zur additiven Herstellung einer Bewehrung eines Bauteils. Insbesondere lässt sich die Bewehrung während einer additiven Fertigung des Bauteils herstellen, wobei das Bauteil durch schichtweises Aufbringen von Beton und/oder Mörtel auf eine Oberfläche hergestellt wird. Alternativ oder zusätzlich kann der Beton und/oder Mörtel auch direkt schichtweise hergestellt werden. Hierbei ist insbesondere zu verstehen, dass die Schritte der schichtweisen Herstellung des Bauteils und die Schritte der schichtweisen Herstellung der Bewehrung gleichzeitig oder zeitlich versetzt/verschachtelt ausgeführt werden. So können entweder alternierend eine Schicht oder mehrere Schichten der Bewehrung und anschließend eine Schicht oder mehrere Schichten des Bauteils hergestellt werden. Alternativ können auch gleichzeitig Schichten von Bauteil und Bewehrung hergestellt werden. Durch die additive Fertigung von Bewehrung und Bauteil, ohne dass eine dieser Komponenten vollständig vorgefertigt sein muss, ist eine einfache und kostengünstige Möglichkeit geschaffen, unterschiedliche Geometrien zu fertigen.

Weitere Einzelheiten, Vorteile und Merkmale der vorliegenden Erfindung ergeben sich aus nachfolgender Beschreibung von Ausführungsbeispielen anhand der Zeichnung. Es zeigt:
- Fig. 1: eine schematische Ansicht eines Bauteils mit Bewehrung während einer additiven Fertigung,
- Fig. 2: eine erste schematische Ansicht einer Fertigungsvorrichtung gemäß einem Ausführungsbeispiel der Erfindung,
- Fig. 3: eine zweite schematische Ansicht der Fertigungsvorrichtung gemäß dem Ausführungsbeispiel der Erfindung,
- Fig. 4: eine erste schematische Detailansicht einer Reibanordnung der Fertigungsvorrichtung gemäß dem Ausführungsbeispiel der Erfindung,
- Fig. 5: eine zweite schematische Detailansicht einer Reibanordnung der Fertigungsvorrichtung gemäß dem Ausführungsbeispiel der Erfindung,
- Fig. 6: eine dritte schematische Detailansicht einer Reibanordnung der Fertigungsvorrichtung gemäß dem Ausführungsbeispiel der Erfindung, und
- Fig. 7: eine vierte schematische Detailansicht einer Reibanordnung der Fertigungsvorrichtung gemäß dem Ausführungsbeispiel der Erfindung.

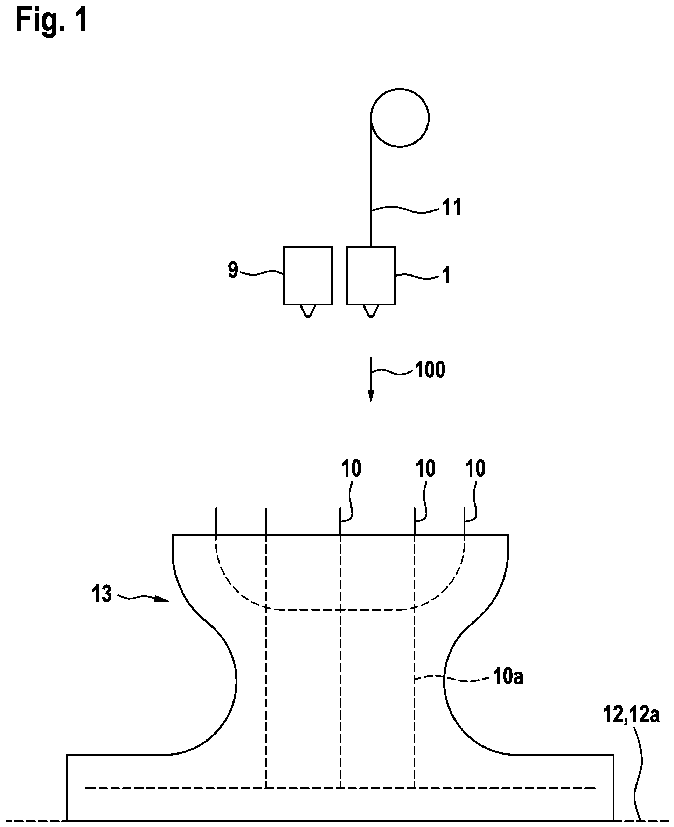

Figur 1 zeigt schematisch eine Fertigungsvorrichtung 1 gemäß einem Ausführungsbeispiel der Erfindung. Die Fertigungsvorrichtung 1 dient zum additiven Fertigen eines Objekts 10 und weist eine Reibanordnung 2 (in Figur 1 nicht gezeigt) auf, der ein strangförmiges Ausgangsmaterial 11 zugeführt wird, beispielsweise durch eine beliebig ausgebildete Zufuhrvorrichtung (nicht gezeigt). Das strangförmige Ausgangsmaterial 11 ist beispielsweise ein Metalldraht. Das Objekt 10 lässt sich durch die Fertigungsvorrichtung 1, insbesondere schichtweise, aufbauen.

Die Reibanordnung 2 dient zum Erhitzen des Ausgangsmaterials 11 sowie zum Beschleunigen des Ausgangsmaterials 11 entlang einer Ausgaberichtung 100. Das Ausgangsmaterial wird durch die Reibanordnung 2 entweder aufgeschmolzen oder zu festen Partikeln zerlegt, wobei das so bearbeitete Ausgangsmaterial auf eine Bauplattform 12 oder auf bereits gefertigte Bereiche des Objekts 10 auftrifft. Bei den gefertigten Bereichen des Objekts 10 handelt es sich insbesondere um bereits gefertigte Schichten. Insbesondere kann das Ausgangsmaterial 11 aus der Reibanordnung 2 somit als Strahl oder als Schrot ausgegeben werden. Durch das Auftreffen auf bereits gefertigte Bereiche des Objekts 10 werden die thermische Energie sowie die kinetische Energie des Ausgangsmaterials 11 genutzt, um eine zuverlässige Verbindung zu den bereits gefertigten Bereichen herzustellen. Dies erfolgt beispielsweise durch eine stoffschlüssige und/oder durch eine formschlüssige Verbindung mit dem bereits gefertigten Bereich.

In dem in Figur 1 gezeigten Beispiel ist vorgesehen, ein Bauteil 13 aus Beton zu fertigen, wobei das Objekt 10 eine Bewehrung für das Bauteil 13 ist. Das Bauteil 13 wird durch, insbesondere schichtweises, Aufbringen von Beton mittels einer Betonausgabe 9 auf eine Oberfläche 12a oder auf bereits gefertigte Bereiche additiv gefertigt. Alternativ kann der Beton auch, insbesondere schichtweise, auf der Oberfläche 12a oder auf bereits gefertigten Bereichen direkt hergestellt werden. Die Oberfläche 12a entspricht in diesem Beispiel der Bauplattform 12. Die Bewehrung wird durch die Fertigungsvorrichtung 1 additiv hergestellt, wobei stets zunächst mehrere Schichten der Bewehrung und anschließend mehrere Schichten des Bauteils 13 aufgebracht werden. Das Bauteil 13 und die Bewehrung können somit in variablen Formen hergestellt werden, sodass eine Flexibilität bei der Herstellung von Bauteilen 13 mit Bewehrung vergrößert ist.

Ist das Objekt 10 eine Bewehrung wie zuvor beschrieben, so ist eine hohe Oberflächengüte des Objekts 10 unerwünscht. Rauigkeiten, Rillen und/oder Hinterschnitte führen vielmehr zu einer optimierten Bindung des Betons an die Bewehrung. Die Fertigungsvorrichtung 1 ermöglicht aber auch das Herstellen von Objekten 10 mit höherer Oberflächengüte. Der Vorteil einer verringerten Oberflächengüte ist eine schnelle Fertigbarkeit einzelner Bereiche bzw. Schichten, wodurch die Gesamtfertigungsdauer des Objekts 10 und damit auch des Bauteils 13 reduziert ist.

Durch die Reibanordnung 2 zur Erhitzung und Beschleunigung des Ausgangsmaterials 11 ist die Fertigungsvorrichtung 1 sehr einfach und kostengünstig herstellbar. Gleichzeitig können rasch Objekte 10 mit hoher Stabilität und Güte hergestellt werden. Das dazu zu verwendende Ausgangsmaterials 11 ist strangförmig und dadurch günstiger als andere Arten von Ausgangsmaterialien wie beispielsweise pulverförmige Materialien.

Durch die Kombination aus kinetischer Energie und thermischer Energie muss nicht die gesamte zum Aufbau einer Schicht benötigte Energie durch thermische Energie bereitgestellt werden. Eine Abwärme beim Herstellen einer Schicht ist damit minimiert. Insbesondere bei dem zuvor beschriebenen Anwendungsfall der Bewehrung ist dies von Vorteil, da während der Herstellung der Bewehrung ein Wärmeeintrag in bereits gefertigte Schichten des Bauteils 13 aus Beton minimiert ist. Werden abwechselnd Schichten des Bauteils 13 aus Beton und der Bewehrung aus Metall hergestellt, so ist der Beton beim Herstellen der Schichten der Bewehrung noch nicht vollständig ausgehärtet. Würde eine zu große Abwärme beim Herstellen der Bewehrung auftreten, so würde dies den Beton nachteilig beeinflussen, was durch die Fertigungsvorrichtung 1 verhindert ist.

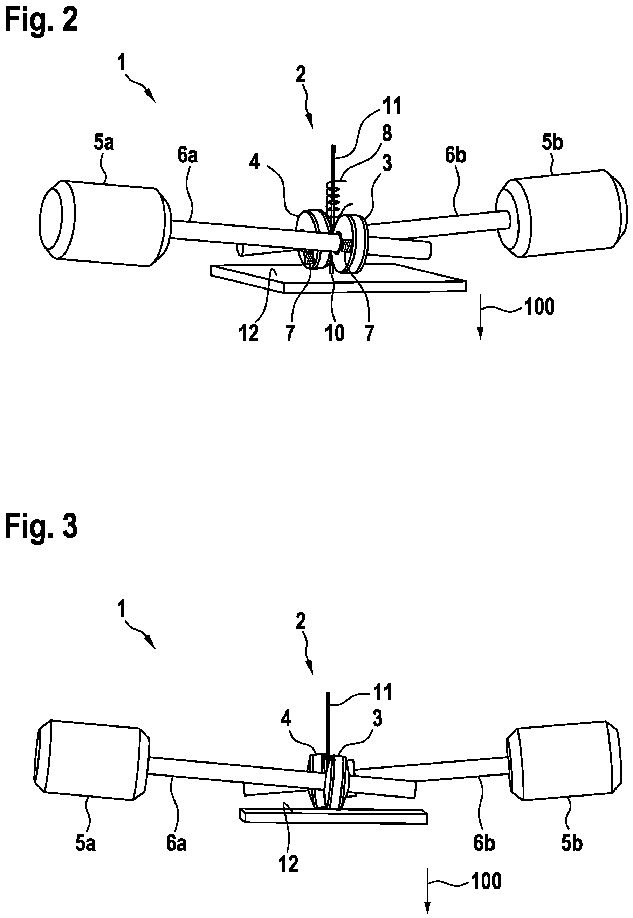

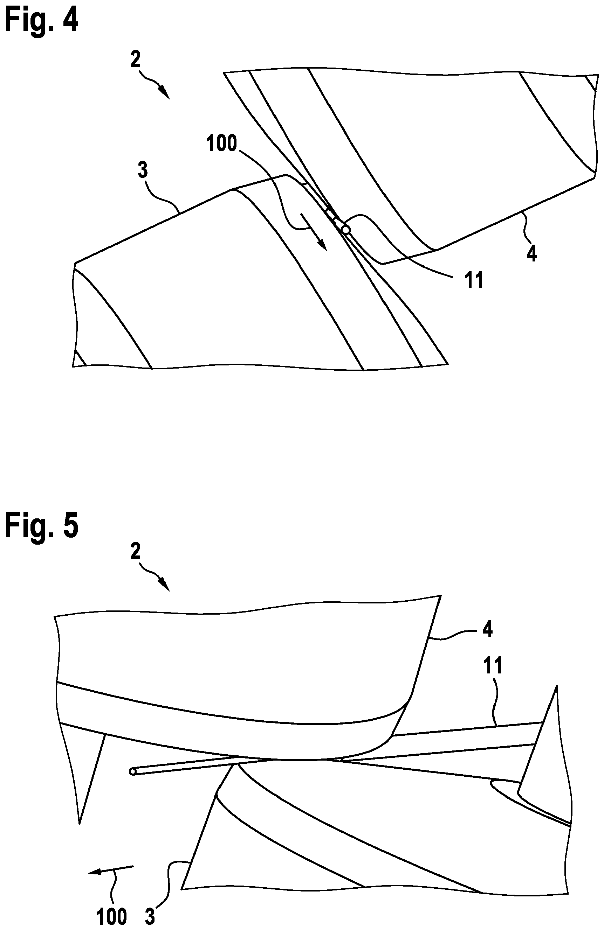

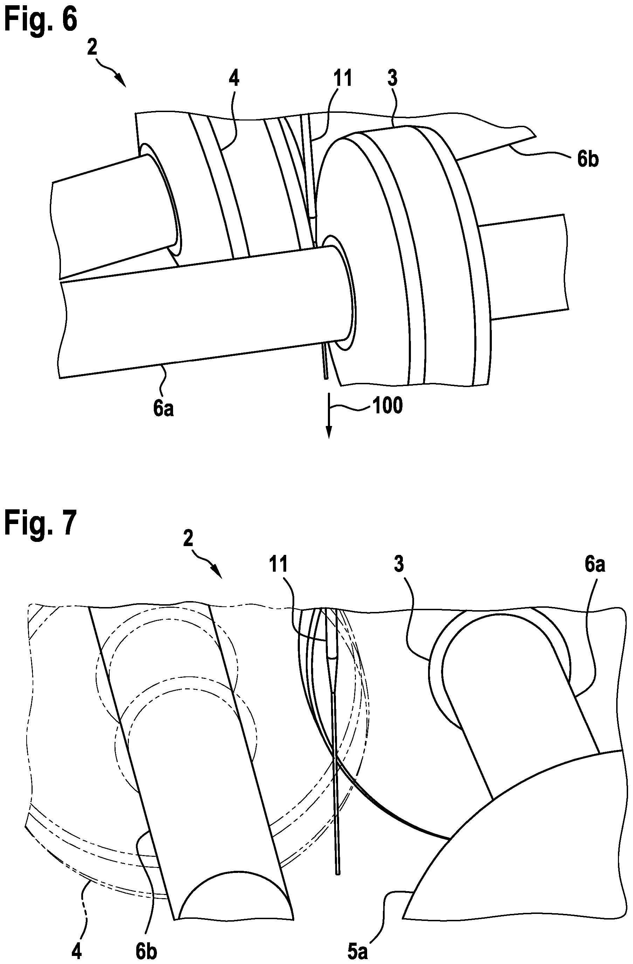

Der Aufbau der Reibanordnung 2 ist in unterschiedlichen Ansichten in den Figuren 2 und 3 gezeigt. Die Figuren 4 bis 7 zeigen einzelne Details der Reibanordnung 2. Alle diese Figuren werden nachfolgend gemeinsam beschrieben.

Die Reibanordnung 2 weist eine erste Reibscheibe 3 und eine zweite Reibscheibe 4 auf. Die erste Reibscheibe 3 ist über eine erste Welle 6a mit einer ersten Antriebsvorrichtung 5a gekoppelt, sodass die erste Antriebsvorrichtung 5a die erste Reibscheibe 3 rotieren kann. Analog dazu ist die zweite Reibscheibe 4 über eine zweite Welle 6b mit einer zweiten Antriebsvorrichtung 5b verbunden, sodass die zweite Antriebsvorrichtung 5b die zweite Reibscheibe 4 rotieren kann. Alternativ kann auch eine gemeinsame Antriebsvorrichtung vorgesehen sein, die zum Antreiben beider Reibscheiben 3, 4 dient (nicht gezeigt). Es ist vorgesehen, dass die erste Reibscheibe 3 und die zweite Reibscheibe 4 bevorzugt in entgegengesetzter Rotationsrichtung rotieren.

Das strangförmige Ausgangsmaterial 11 ist beispielsweise ein Metalldraht oder ein strangförmiger Kunststoff. Wird das Ausgangsmaterial 11 der Reibanordnung 2 zugeführt, so erfolgt ein Durchführen des Ausgangsmaterials 11 zwischen der ersten Reibscheibe 3 und der zweiten Reibscheibe 4, insbesondere zwischen den Reibflächen der ersten Reibscheibe 3 und der zweiten Reibscheibe 4. Dadurch entsteht eine Reibung zwischen dem Ausgangsmaterial 11 und der ersten Reibscheibe 3 sowie der zweiten Reibscheibe 4, insbesondere zwischen dem Ausgangsmaterial 11 und den Reibflächen der ersten Reibscheibe 3 und der zweiten Reibscheibe 4. Besonders vorteilhaft wird das Ausgangsmaterial 11 zwischen Stirnflächen der ersten Reibscheibe 3 und der zweiten Reibscheibe 4 hindurchgeführt. Die erste Reibscheibe 3 und die zweite Reibscheibe 4 werden dazu durch die entsprechende Antriebsvorrichtung 5a, 5b rotiert.

Das Hindurchführen des Ausgangsmaterials 11 zwischen der rotierenden ersten Reibscheibe 3 und der rotierenden zweiten Reibscheibe 4 führt zu einem Erhitzen des Ausgangsmaterials 11 und insbesondere zum zumindest teilweisen Aufschmelzen des Ausgangsmaterials 11. Nachdem das Ausgangsmaterial 11 die erste Reibscheibe 3 und die zweite Reibscheibe 4 passiert hat, wird dieses als geschmolzener Strahl oder als Ansammlung von festen Partikeln entlang der Ausgaberichtung 100 zu der Bauplattform 12 ausgegeben. Besonders vorteilhaft wird das Ausgangsmaterial 11 durch die erste Reibscheibe 3 und die zweite Reibscheibe 4 auf ein erhöhtes Temperaturniveau gebracht und gleichzeitig in Ausgaberichtung 100 beschleunigt.

Durch die Winkelgeschwindigkeiten der ersten Reibscheibe 3 und der zweiten Reibscheibe 4 sowie durch eine Vorschubgeschwindigkeit des Ausgangsmaterials 11 lässt sich die einzubringende Reibenergie einstellen. Bevorzugt ist vorgesehen, dass sich derjenige Bereich der ersten Reibscheibe 3 und/oder der zweiten Reibscheibe 4, der mit dem Ausgangsmaterial 11 in Kontakt kommt, mit einer solchen Geschwindigkeit um die Rotationsachse der jeweiligen Reibscheibe 3, 4 bewegt, die um mindestens einen Faktor 10, bevorzugt um mindestens einen Faktor 100, besonders bevorzugt um mindestens einen Faktor 1000, größer ist als die zuvor beschriebene Vorschubgeschwindigkeit des Ausgangsmaterials 11. Durch diese Parameter lässt sich die Reibanordnung 2 optimal an das zu verwendende Ausgangsmaterial 11 anpassen.

Besonders vorteilhaft können die erste Reibscheibe 3 und die zweite Reibscheibe 4 unterschiedliche Winkelgeschwindigkeiten aufweisen. Dadurch wird ein Drall in das Ausgangsmaterial 11 eingebracht. Dieser Drall sorgt für eine Stabilisierung der Bewegungstrajektorie des Ausgangsmaterials 11 nach Verlassen der Reibanordnung 2 bis zum Auftreffen auf die Bauplattform 12 oder die bereits gefertigten Bereiche des Objekts 10. Somit lassen sich vorgebbare Formen des Objekts 10 möglichst genau herstellen. Insbesondere kann eine Oberflächengüte des Objekts 10 optimiert werden.

Die erste Reibscheibe 3 und die zweite Reibscheibe 4 sind bevorzugt konisch ausgebildet. Insbesondere nimmt eine entlang der jeweiligen Rotationsachse der Reibscheiben 3, 4 gemessene Dicke der ersten Reibscheibe 3 und/oder der zweiten Reibscheibe 4 in radialer Richtung ab. Alternativ oder zusätzlich sind die erste Welle 6a und die zweite Welle 6b und damit die zugehörigen Rotationsachsen der ersten Reibscheibe 3 und der zweiten Reibscheibe 4 gegeneinander gewinkelt orientiert (und damit nichtparallel ausgerichtet). Dadurch lässt sich eine Kontaktfläche, mit der die Reibscheiben 3, 4 an dem Ausgangsmaterial 11 anliegen und das Ausgangsmaterial 11 durch Reibung erhitzen, optimieren.

Die erste Reibscheibe 3 und/oder die zweite Reibscheibe 4 sind bevorzugt aus einem hitzefesten und/oder verschleißfesten Material, insbesondere aus einem Keramikmaterial, hergestellt. Alternativ oder zusätzlich weisen die erste Reibscheibe 3 und/oder die zweite Reibscheibe 4 eine hitzefeste und/oder verschleißfeste Beschichtung auf, die vorteilhaft aus einem Keramikmaterial hergestellt ist. Somit ist ein Verschleiß der Reibanordnung 2 minimiert und eine Haltbarkeit/Standzeit der Reibanordnung 2 maximiert.

Durch die Reibvorrichtung 2 lässt sich das Ausgangsmaterial 11 schnell und zuverlässig erhitzen. Ein Materialaustrag des Ausgangsmaterials 11 aus der Reibanordnung 2 ist damit maximiert. Bevorzugt ist ein Materialaustrag von zumindest 10 kg/h, weiter bevorzugt von zumindest 20 kg/h und besonders bevorzugt von zumindest 25 kg/h vorgesehen. Somit können die Objekte 10 performant gefertigt werden.

Weiterhin ist bevorzugt vorgesehen, dass das Ausgangsmaterial 11 unmittelbar vor Erreichen der Reibanordnung 2 vorgeheizt wird. Das Vorheizen erfolgt durch eine Vorheizvorrichtung 8 (vgl. Figur 2) und bevorzugt durch induktives Heizen des Ausgangsmaterials 11. In dem in Figur 2 gezeigten Beispiel ist die Vorheizvorrichtung 8 eine Spule, durch die das Ausgangsmaterial 11 hindurch geführt ist. Durchfließt ein elektrischer Strom die Spule der Vorheizvorrichtung 8, so wird in einem metallischen Ausgangsmaterial 11 ein Strom induziert, der zu einer Erwärmung des Ausgangsmaterials 11 führt. Somit muss weniger Reibleistung durch die Reibanordnung 2 generiert werden, um zu demselben Temperaturniveau des Ausgangsmaterials 11 wie ohne Vorheizvorrichtung 8 zu gelangen. Dies verringert einerseits die gesamte Aufheizzeit und sorgt andererseits für eine geringere Belastung der Reibanordnung 2.

Bevorzugt ist außerdem vorgesehen, dass die erste Reibscheibe 3 und/oder die zweite Reibscheibe 4 über zumindest eine Heizvorrichtung 7 erwärmt werden. Auch hier ist bevorzugt ein induktives Heizen vorgesehen, da hierzu keinerlei physischer Kontakt zwischen der Heizvorrichtung 7 und den Reibscheiben 3, 4 notwendig ist. Durch das Heizen der ersten Reibscheibe 3 und/oder der zweiten Reibscheibe 4 ist wiederum eine benötigte Reibleistung der Reibanordnung 2 reduziert, wodurch wiederum eine höhere Aufheizgeschwindigkeit und/oder eine geringere Belastung der Reibanordnung 2 erreicht ist.

Mittels der Reibanordnung 2 lassen sich außerdem unterschiedliche Ausgangsmaterialien 11 zu einem einzigen Objekt 10 verarbeiten. So lassen sich beispielsweise Stähle und Kupfer oder auch Nickel und Kupfer einfach und aufwandsarm kombinieren, um ein Objekt 10 aus Multimaterialen herzustellen. Auch die Verarbeitung von Kunststoff, insbesondere von Hochleistungskunststoff wie PEEK, lässt sich mit der Fertigungsvorrichtung 1 einfach und aufwandsarm umsetzen, um entsprechende Objekte 10 herzustellen. Solche Kunststoffe können vorteilhafterweise auch kurzfaserverstärkt sein. Sind Kurzfasern innerhalb des Ausgangsmaterials 11 vorgesehen, so lassen sich diese bevorzugt entlang der Ausgaberichtung 100 orientieren, da durch die kinetische Energie des erhitzten Ausgangsmaterials 11 nach dem Beschleunigen eine Stecknadelwirkung der Kurzfasern beim Auftreffen auf bereits gefertigte Schichten des Objekts 10 erfolgt. Dies bedeutet, dass die Kurzfasern in Ausgaberichtung 100 in der bereits gefertigten Schicht "steckenbleiben" und somit die Ausrichtung entlang der Ausgaberichtung 100 beibehalten. Dies führt zu einer erhöhten Bindung aufeinanderfolgender Schichten des Objekts 10 untereinander.

Neben der eingangs genannten Anwendung zum Herstellen von Bewehrungen, bei denen nur eine relativ grobe Genauigkeit notwendig ist, kann die zuvor beschriebene Fertigungsvorrichtung 1 auch für andere Anwendungsfälle eingesetzt werden, da insbesondere ein Durchmesser des von der Reibanordnung 2 ausgegebenen Strahls an Ausgangsmaterial 11 bis zu 0,5 mm erreichbar ist.

Neben der vorstehenden schriftlichen Beschreibung der Erfindung wird zu deren ergänzender Offenbarung hiermit explizit auf die zeichnerische Darstellung der Erfindung in den Fig. 1 bis 7 Bezug genommen.

### Bezugszeichenliste

- 1: Fertigungsvorrichtung
- 2: Reibanordnung
- 3: erste Reibscheibe
- 4: zweite Reibscheibe
- 5a: erste Antriebsvorrichtung
- 5b: zweite Antriebsvorrichtung
- 6a: erste Welle
- 6b: zweite Welle
- 7: Heizvorrichtung
- 8: Vorheizvorrichtung
- 9: Betonausgabe
- 10: Objekt
- 10a: Bewehrung
- 11: Ausgangsmaterial
- 12: Bauplattform
- 12a: Oberfläche
- 13: Bauteil
- 100: Ausgaberichtung

## Patentansprüche

1. Verfahren zur additiven Fertigung eines Objekts (10), aufweisend die Schritte
• Zuführen eines strangförmigen Ausgangsmaterials (11) zu einer Reibanordnung (2), und
• Beschleunigen des Ausgangsmaterials (11) entlang einer Ausgaberichtung (100) durch die Reibanordnung (2), um das Ausgangsmaterial (11), insbesondere schichtweise, auf eine Bauplattform (12) und/oder auf bereits gefertigte Bereiche des Objekts (10) zur Fertigung des Objekts (10) aufzubringen,
• wobei das strangförmige Ausgangsmaterial (11) durch die Reibanordnung (2) zumindest teilweise verflüssigt und/oder zumindest teilweise plastifiziert und/oder zumindest teilweise zu Partikeln zerlegt wird.

2. Verfahren nach Anspruch 1, **dadurch gekennzeichnet, dass** durch die Reibanordnung (2) ein Erhitzen des Ausgangsmaterials (11) durch Reibung erfolgt.

3. Verfahren nach einem der vorhergehenden Ansprüche, **dadurch gekennzeichnet, dass** die Reibanordnung (2) beheizt wird, wobei das Heizen bevorzugt durch induktives Heizen der Reibanordnung (2) und/oder bevorzugt durch induktives Heizen von angrenzenden Maschinenelementen erfolgt, welche Wärme in die Reibanordnung (2) einleiten.

4. Verfahren nach einem der vorhergehenden Ansprüche, **dadurch gekennzeichnet, dass** das Ausgangsmaterial (11) während des Zuführens, insbesondere unmittelbar vor Erreichen der Reibanordnung (2), vorgeheizt wird, wobei das Vorheizen bevorzugt durch induktives Heizen des Ausgangsmaterials (11) erfolgt.

5. Verfahren nach einem der vorhergehenden Ansprüche, **dadurch gekennzeichnet, dass** durch die Reibanordnung (2) ein Materialaustrag des Ausgangsmaterials (11) von zumindest 5 kg/h, bevorzugt von zumindest 10 kg/h, besonders bevorzugt von zumindest 20 kg/h, erfolgt.

6. Verfahren nach einem der vorhergehenden Ansprüche, **dadurch gekennzeichnet, dass** das Objekt (10) aus unterschiedlichen Ausgangsmaterialien (11) hergestellt wird, insbesondere indem entweder derselben Reibanordnung (2) gleichzeitig oder nacheinander unterschiedliche Ausgangsmaterialien (11) zugeführt werden und/oder indem mehrere Reibanordnungen (2) vorgesehen sind, denen unterschiedliche Ausgangsmaterialien (11) zugeführt werden, wobei alle Reibanordnungen (2) bevorzugt zur Herstellung desselben Objekts (10) vorgesehen sind.

7. Verfahren nach einem der vorhergehenden Ansprüche, **dadurch gekennzeichnet, dass** ein additives Fertigen eines Bauteils (13) durch schichtweises Auftragen von Beton und/oder Mörtel auf eine Oberfläche und/oder durch schichtweises Herstellen von Beton oder Mörtel auf einer Oberfläche erfolgt, wobei das Objekt (10) bevorzugt eine Bewehrung (10a) innerhalb des Bauteils (13) ist, die während der additiven Fertigung des Bauteils (13) mittels eines Verfahrens nach einem der vorhergehenden Ansprüche gefertigt wird.

8. Fertigungsvorrichtung (1) zur additiven Fertigung eines Objekts (10), aufweisend eine Reibanordnung (2), der ein strangförmiges Ausgangsmaterial (11) zuführbar ist, wobei die Reibanordnung (2) ausgebildet ist, das Ausgangsmaterial (11) entlang einer Ausgaberichtung (100) zu beschleunigen, um das Ausgangsmaterial (11), insbesondere schichtweise, auf eine Bauplattform (12) und/oder auf bereits gefertigte Bereiche des Objekts (10) zur Fertigung des Objekts (10) aufzubringen, wobei die Reibanordnung (2) ausgebildet ist, das strangförmige Ausgangsmaterial (11) zumindest teilweise zu verflüssigen und/oder zumindest teilweise zu plastifizieren und/oder zumindest teilweise zu Partikeln zu zerlegen.

9. Fertigungsvorrichtung (1) nach Anspruch 8, **dadurch gekennzeichnet, dass** die Reibanordnung (2) eine erste Reibscheibe (3) und eine zweite Reibscheibe (4) aufweist, wobei die erste Reibscheibe (3) und die zweite Reibscheibe (4) durch zumindest eine Antriebsvorrichtung (5a, 5b) in entgegengesetzter Rotationsrichtung rotierbar sind und wobei das Ausgangsmaterial (11) zwischen den Reibflächen der ersten Reibscheibe (3) und der zweiten Reibscheibe (4) hindurchführbar ist, um beschleunigt, und insbesondere durch Reibung erhitzt, zu werden, und wobei insbesondere eine Bahngeschwindigkeit desjenigen Bereichs der ersten Reibscheibe (3) und/oder der zweiten Reibscheibe (4), der mit dem Ausgangsmaterial (11) in Kontakt gelangt, um mindestens einen Faktor 10, bevorzugt um mindestens einen Faktor 100, besonders bevorzugt um mindestens einen Faktor 1000, größer ist als eine Vorschubgeschwindigkeit des Ausgangsmaterials (11) entlang der Reibanordnung (2).

10. Fertigungsvorrichtung (1) nach Anspruch 9, **dadurch gekennzeichnet, dass** die erste Reibscheibe (3) und/oder die zweite Reibscheibe (4) zumindest teilweise konisch ausgeführt sind und/oder über jeweils eine Welle (6a, 6b) antreibbar sind, wobei die Wellen (6a, 6b) bevorzugt nichtparallel orientiert sind.

11. Fertigungsvorrichtung (1) nach Anspruch 9 oder 10, **dadurch gekennzeichnet, dass** die erste Reibscheibe (3) und/oder die zweite Reibscheibe (4) mittels zumindest einer Heizvorrichtung (7), insbesondere durch induktives Heizen, aufheizbar sind.

12. Fertigungsvorrichtung (1) nach einem der Ansprüche 9 bis 11, **dadurch gekennzeichnet, dass** die erste Reibscheibe (3) und die zweite Reibscheibe (4) durch die zumindest eine Antriebsvorrichtung (5a, 5b) mit unterschiedlichen Drehzahlen rotierbar sind.

13. Fertigungsvorrichtung (1) nach einem der Ansprüche 8 bis 12, **gekennzeichnet durch** eine Vorheizvorrichtung (8), die zum Vorheizen des Ausgangsmaterials (11) vor Erreichen der Reibanordnung (2), insbesondere durch induktives Heizen, ausgebildet ist.

14. Verfahren nach einem der Ansprüche 1 bis 7 oder Fertigungsvorrichtung (1) nach einem der Ansprüche 8 bis 13, **dadurch gekennzeichnet, dass** das Ausgangsmaterial (11) ein Metalldraht, ein Kunststoff in Strangform oder ein Verbundmaterial in Strangform ist.

15. Verwendung einer Fertigungsvorrichtung (1) nach einem der Ansprüche 8 bis 14 zur additiven Herstellung einer Bewehrung (10a) eines Bauteils (13), insbesondere während einer additiven Fertigung des Bauteils (13) durch schichtweises Aufbringen von Beton und/oder Mörtel auf eine Oberfläche und/oder durch schichtweises Herstellen von Beton oder Mörtel auf einer Oberfläche (12a).
